# DEMANDE DE BREVET EUROPEEN

(11) **EP 4 667 252 A1**
(43) Date de publication de la demande: **24.12.2025**
(21) Numéro de dépôt: 25181178.2
(22) Date de dépôt: 05.06.2025
(51) Int. Cl.: B60J 7/16, B60P 3/38

(54) **SYSTÈME DE TOIT COUCHETTE POUR VÉHICULE AUTOMOBILE**

(30) Priorité: 18.06.2024 FR 2406480
(71) Demandeur: Renault s.a.s, 92100 Boulogne Billancourt (FR)
(72) Inventeur: CALMET, Samuel, 78280 GUYANCOURT (FR); OLLIVIER, Yann, 78280 GUYANCOURT (FR)

(57) **Abrégé**

Ce système de toit couchette pour véhicule automobile, comprend un pavillon de toit (3) articulé par rapport à la caisse (5) du véhicule entre une position fermée dans laquelle le pavillon assure la fermeture du toit du véhicule et une position ouverte de couchette dans laquelle le pavillon s'étend latéralement par rapport au véhicule pour former une structure de couchage (7), un ensemble d'arceaux (9) articulés entre une position escamotée et une position active dressée par rapport au pavillon, en position active dudit pavillon, un ensemble de câbles de soutien (10) fixés par une extrémité au pavillon et par une extrémité opposée à la caisse du véhicule de manière à soutenir le pavillon en position couchette, et un dispositif de capotage (8) comprenant une toile (11) recouvrant les arceaux et les câbles, en position de couchette.

## Description

### Domaine technique

La présente invention concerne les systèmes de toit couchette pour véhicules automobiles et, en particulier, un système de toit couchette qui peut être utilisé pour tout type de véhicule automobile, notamment de type caravane, camping-car, remorque, mais également pour des véhicules de faible hauteur, de type berline ou SUV (pour « Sport Utility Vehicle »).

### Techniques antérieures

Un tel système est destiné à constituer une alternative aux toits généralement connus sous l'appellation de « pop-up » qui désigne un toit relevable qui peut équiper certains types de véhicule utilitaire et qui est susceptible d'adopter une position haute pour former un volume complémentaire qui peut être alloué soit au couchage, soit à l'habitacle du véhicule. Le toit relevable permet en position haute soit une configuration couchage, soit une configuration d'augmentation de l'espace habitable.

En configuration couchage, le matelas est en position abaissée et disposé approximativement au niveau du pavillon du véhicule, ce qui réduit de fait la hauteur de l'espace habitable du véhicule. En configuration d'augmentation de l'espace habitable, le matelas est positionné en position haute contre le toit relevable en position haute également.

Ce type de solution de couchage, bien qu'avantageux en ce qu'il offre une position de couchage surélevée, présente des inconvénients majeurs, dans la mesure où il réduit le volume de l'habitacle lorsque le toit relevable est en configuration de couchage.

### Exposé de l'invention

Le but de l'invention est donc de pallier les inconvénients précités et de proposer un système de toit couchette pour véhicule automobile permettant d'intégrer une couchette dans le pavillon de toit du véhicule qui, notamment, permette de conserver la pleine hauteur utile à l'intérieur du véhicule, et qui soit aisé à manipuler tout en étant confortable et étanche.

L'invention a donc pour objet un système de toit couchette pour véhicule automobile, comprenant un pavillon de toit articulé par rapport à la caisse du véhicule entre une position fermée dans laquelle le pavillon assure la fermeture du toit du véhicule et une position ouverte de couchette dans laquelle le pavillon s'étend latéralement par rapport au véhicule pour former une structure de couchage, un ensemble d'arceaux articulés entre une position escamotée et une position active dressée par rapport au pavillon, en position ouverte dudit pavillon, un ensemble de câbles de soutien fixés par une extrémité au pavillon et par une extrémité opposée à la caisse du véhicule de manière à soutenir le pavillon en position ouverte de couchette, et un dispositif de capotage comprenant une toile couvrant les arceaux et les câbles en position de couchette.

Ainsi, le pavillon du véhicule étant articulé, celui-ci peut s'ouvrir de manière à déployer une couchette intégrée dans le pavillon.

Le dispositif de capotage intégré permet alors de recouvrir l'ensemble du véhicule et du pavillon, de manière à pouvoir garantir l'étanchéité.

Un tel système peut également être intégré dans un véhicule de relativement faible hauteur, puisque le couchage est déporté à côté du véhicule, de sorte qu'il est possible de se tenir debout dans le véhicule, même de hauteur relativement réduite.

Selon une autre caractéristique de l'invention, le pavillon est doté d'un pied qui repose sur le sol dans ladite disposition ouverte de couchette.

Dans un mode de réalisation, le pavillon de toit comporte un axe d'articulation qui est déporté latéralement vers l'extérieur du véhicule, par rapport aux axes d'articulation des arceaux.

Avantageusement, le pavillon comporte un bord tombé qui s'étend au-delà de la caisse en position fermée.

La toile peut être positionnée de manière à recouvrir la zone d'extrémité du pavillon.

De préférence, au moins un joint d'étanchéité est prévu, sur lequel s'appuie le pavillon en position fermée.

Dans un mode de réalisation, les arceaux comprennent une extrémité articulée en forme de col de cygne.

Avantageusement, l'axe d'articulation du pavillon est porté par une pièce rapportée montée sur la caisse du véhicule.

L'invention a également pour objet un véhicule automobile comprenant un système de toit couchette tel que défini ci-dessus.

### Brève description des dessins

D'autres buts, caractéristiques et avantages de l'invention apparaîtront à la lecture de la description suivante, donnée uniquement à titre d'exemple non limitatif, et faite en référence aux dessins sur lesquels :
- [Fig 1] et [Fig 2] illustrent un véhicule automobile doté d'un système de toit couchette conforme à l'invention, respectivement en position fermée et en position ouverte de couchette ;
- [Fig 3] illustre l'articulation du pavillon par rapport à la caisse du véhicule ;
- [Fig 4] illustre schématiquement la structure générale du système de toit couchette selon l'invention ;
- [Fig 5] et [Fig 6] montrent l'articulation du pavillon par rapport à la caisse du véhicule ;
- [Fig 7], [Fig 8] et [Fig 9] sont des vues de détail montrant l'articulation du pavillon et des arceaux par rapport à la caisse du véhicule ; et
- [Fig 10] montre des moyens de verrouillage du système de toit couchette conforme à l'invention.

### Exposé détaillé d'au moins un mode de réalisation

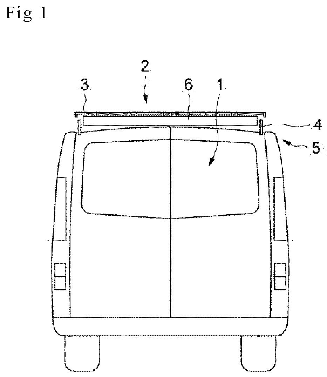

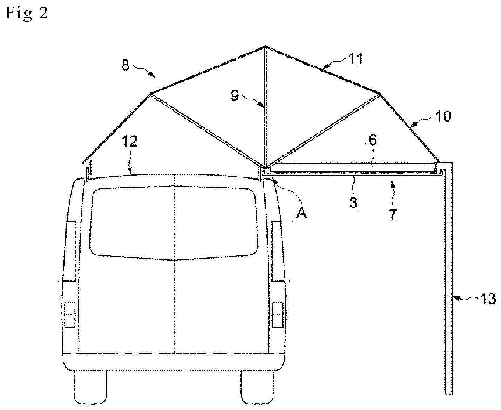

On se référera tout d'abord aux figures 1 et 2 qui montrent un véhicule automobile 1 de type fourgon, doté d'un système de toit couchette 2 conforme à l'invention, respectivement en position fermée dans laquelle le système de toit couchette est fermé de manière étanche sur la caisse du véhicule pour constituer le toit du véhicule et en position ouverte dans laquelle le système de toit est déployé latéralement pour former un couchage.

Le système de toit couchette 2 est réalisé à partir du pavillon de toit 3 du véhicule qui est monté de manière articulée par rapport à un brancard 4 monté sur la caisse 5 du véhicule, par rapport à un axe d'articulation A qui s'étend longitudinalement le long de l'un des côtés latéraux de la caisse 5 du véhicule, ici le côté droit du véhicule en vue arrière.

En position fermée visible sur la figure 1, la face interne du pavillon 3 tournée vers l'habitacle du véhicule est doté d'un couchage, comprenant un matelas 6 qui peut être recouvert, en position fermée, par un système de garniture amovible, ou un système de rideau mécanique escamotable, pour permettre le déploiement du pavillon, tout en conservant l'esthétique de l'habitacle lorsque le système est fermé. Ce système de garniture ou de rideau constitue ainsi un rangement pour le matelas, en position fermée du système de toit couchette, pour que l'ensemble soit invisible dans le véhicule en conditions de roulage.

En position ouverte, le pavillon s'étend latéralement à partir du côté latéral du véhicule sur lequel il est articulé et forme avec le matelas 6 une structure de couchage 7. Dans cette position ouverte, un abri étanche est également formé, sous le pavillon, à côté de la voiture.

Le système de toit couchette comporte par ailleurs un dispositif de capotage 8, comprenant un ensemble d'arceaux articulé 9, des câbles de soutien 10 avant et arrière, et une toile de tente 11 en appui sur les arceaux et les câbles de manière à recouvrir toute la zone de couchage 7 ainsi que la zone de toit ouverte 12 du véhicule. La toile est avantageusement maintenue en position de débordement par rapport à la zone de couchage et au toit du véhicule par un système de sangles ou par un système d'aimants intégrés dans la toile. En position fermée, un ensemble de sangles (non représentées) assurent également le maintien de la toile en position contre le matelas.

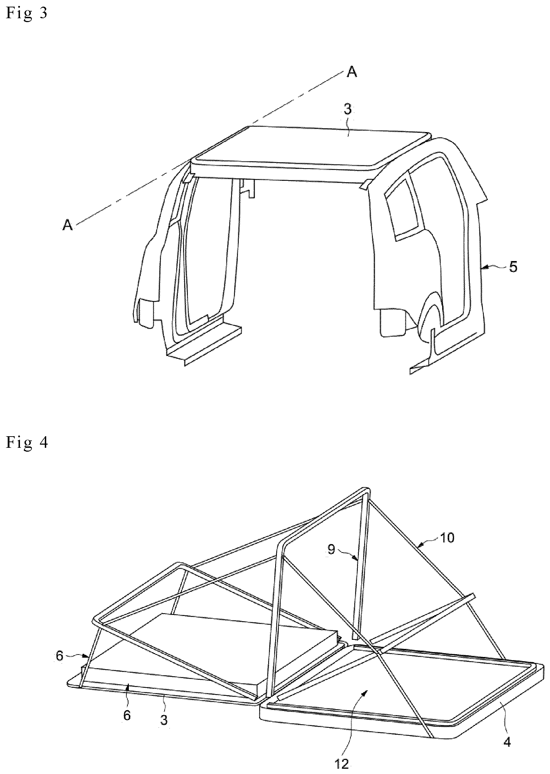

En se référant à la figure 4, sur laquelle on reconnaît le berceau 4 de la caisse 5 du véhicule ainsi que la structure de couchage 7 comprenant le pavillon 3 et le matelas 6 articulés par rapport à l'axe d'articulation A, on voit que les câbles, qui sont tendus par les arceaux 9, sont fixés, d'une part, par une extrémité, à la caisse du véhicule à l'opposé de l'axe d'articulation A et, d'autre part, par l'autre extrémité, au côté libre du pavillon, opposé à la zone d'articulation, de manière à maintenir le pavillon en position ouverte de couchage et à supporter le poids du ou des utilisateurs. Les câbles de maintien de la structure de couchage permettent en outre la cinématique et l'ergonomie d'ouverture et de fermeture.

Comme le montre la figure 2, le système de toit couchette peut être complété par un ou plusieurs pieds 13, également articulés ou amovibles, qui reposent sur le sol dans la position ouverte de couchette du pavillon 3. Ces poteaux sont conçus pour pouvoir se ranger avec la couchette une fois le toit fermé. Ces poteaux sont en outre avantageusement équipés d'un système télescopique de réglage optionnel.

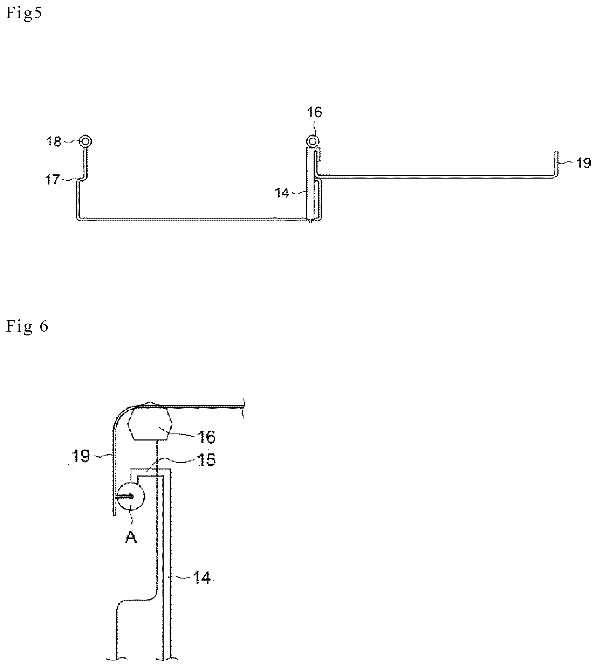

En se référant aux figures 5 et 6, on voit que l'axe de rotation A du pavillon est monté sur une pièce 14 rapportée qui est solidarisée à la caisse du véhicule.

Cette pièce rapportée 14 comporte une zone d'extrémité recourbée portant l'axe d'articulation A de manière à décaler cet axe latéralement vers l'extérieur, par rapport au véhicule.

Cette pièce rapportée 14 porte également un joint d'étanchéité 16 à l'eau et à l'air.

Du côté opposé, une pièce rapportée similaire 17 est fixée sur la caisse du véhicule et porte un joint étanchéité 18 positionné au même niveau que le joint référencé 16.

Comment on le voit sur la figure 5, le pavillon 3 comporte, de chaque côté, un bord tombé, tel que 19, qui s'étend au-delà du brancard de la caisse, en position fermée, de manière à assurer une étanchéité du pavillon dans cette position fermée.

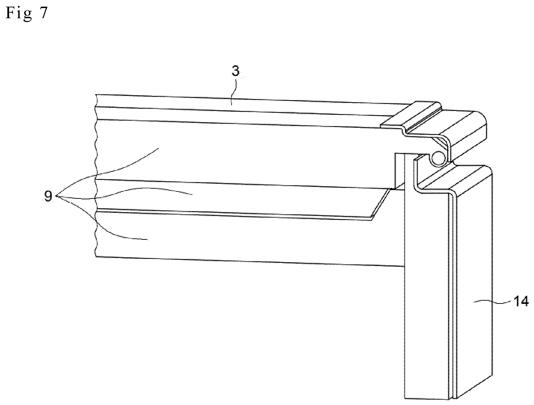

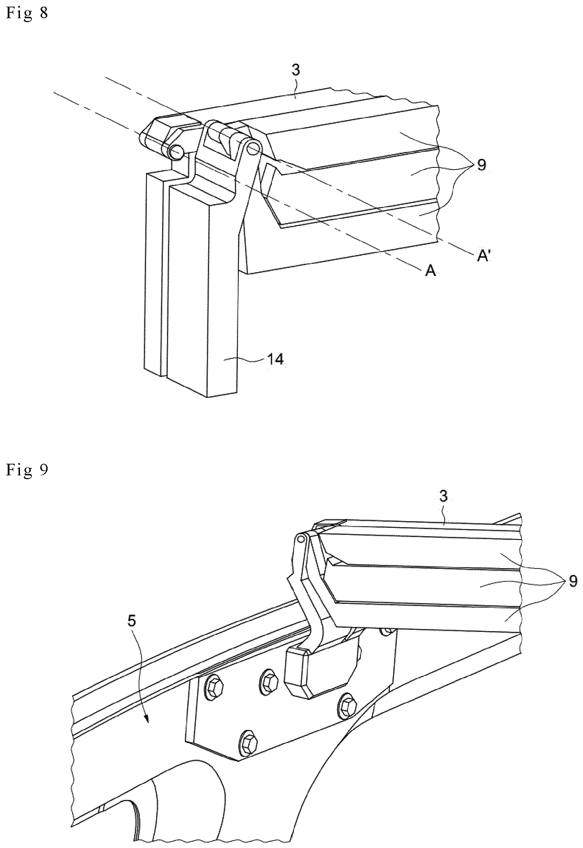

Comme le montrent les figures 7, 8 et 9, qui illustrent le pavillon 3 et les arceaux 9, l'axe d'articulation A du pavillon est décalé latéralement par rapport à l'axe d'articulation A' des arceaux.

Afin de permettre leur rotation et les positions dépliées et repliées, les arceaux ont à cet égard une extrémité en forme de col de cygne.

Des butées limitent le déplacement angulaire de chacun des arceaux de sorte qu'ils adoptent une position angulaire prédéterminée et stable, en position ouverte. Les butées peuvent être disposées le long d'un unique câble, ou bien elles peuvent être réalisées directement par l'intermédiaire de câbles ayant des longueurs différentes les uns des autres
Les arceaux assurent le maintien et la tension des câble 11 en position ouverte.

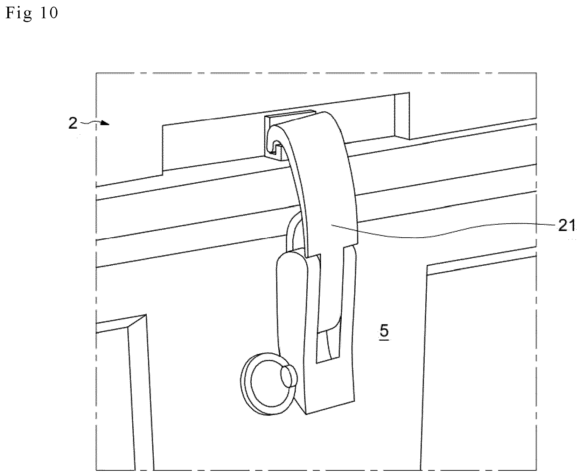

En se référant à la figure 10, dans la position fermée, un dispositif de verrouillage à brides 21 assure le verrouillage du pavillon de toit en position fermée en appui contre les joints d'étanchéité 16 et 18. Ce dispositif permet une compression des joints afin d'augmenter l'étanchéité à l'eau et à l'air. On obtient ainsi une étanchéité tant en position ouverte qu'en position fermée.

On notera que le système qui vient d'être décrit peut être intégré directement au véhicule, mais peut également être proposé en seconde monte, en après-vente. Il peut également avantageusement être équipé d'un système de motorisation à l'ouverture et à la fermeture ;
On notera également que dans divers modes de réalisation, l'ensemble des éléments qui composent le système de toit couchette peut être replié pour être intégré directement à l'intérieur de l'habitacle du véhicule, et notamment : les poteaux de maintien, le matelas avec éventuellement les couvertures et draps, les pieds, la toile de tente, les câbles et les arceaux.

Les couvertures et draps sont avantageusement sanglés sur le matelas pour permettre de refermer le toit sans risque de faire tomber un objet à l'intérieur.

Comme indiqué précédemment, après fermeture du toit et serrage des sangles de la toile de tente sous le matelas, un rideau, par exemple un rideau occultant de toit ouvrant, est par exemple refermé pour redonner un aspect de garniture normale à la voiture.

Un tel rideau est par exemple enroulable et monté en zone arrière.

## Revendications

1. Système de toit couchette pour véhicule automobile, **caractérisé en ce qu'**il comprend un pavillon de toit (3) articulé par rapport à la caisse (5) du véhicule entre une position fermée dans laquelle le pavillon assure la fermeture du toit du véhicule et une position ouverte de couchette dans laquelle le pavillon s'étend latéralement par rapport au véhicule pour former une structure de couchage (7), un ensemble d'arceaux (9) articulés entre une position escamotée et une position active dressée par rapport au pavillon, en position active dudit pavillon, un ensemble de câbles de soutien (10) fixés par une extrémité au pavillon et par une extrémité opposée à la caisse du véhicule de manière à soutenir le pavillon en position couchette, et un dispositif de capotage (8) comprenant une toile (11) recouvrant les arceaux et les câbles, en position de couchette.

2. Système de toit couchette selon la revendication 1, dans lequel le pavillon est doté d'un pied (13) qui repose sur le sol dans ladite position ouverte de couchette.

3. Système selon l'une des revendication 1 et 2, dans lequel le pavillon de toit comporte un axe d'articulation (A) qui est déporté latéralement vers l'extérieur du véhicule, par rapport aux axes (A') d'articulation des arceaux.

4. Système selon la revendication 3, dans lequel le pavillon comporte un bord tombé (19) qui s'étend au-delà de la caisse en position fermée.

5. Système selon la revendication 4, dans lequel la toile est positionnée de manière à recouvrir la zone d'extrémité du pavillon.

6. Système selon l'une des revendications 4 et 5, comprenant au moins un joint d'étanchéité (16, 18) sur lequel s'appuie le pavillon en position fermée.

7. Système selon l'une quelconque des revendications 3 à 6, dans lequel les arceaux (9) comprennent une extrémité articlée en forme de col de cygne.

8. Système selon l'une quelconque des revendications 3 à 7, dans lequel l'axe d'articulation du pavillon est porté par une pièce rapportée (14, 17) montée sur la caisse du véhicule.

9. Véhicule automobile comprenant un système de toit couchette selon l'une quelconque des revendications 1 à 8.
